# EUROPEAN PATENT APPLICATION

(11) **EP 4 017 039 A1**
(43) Date of publication of application: **22.06.2022**
(21) Application number: 21214543.7
(22) Date of filing: 14.12.2021
(51) Int. Cl.: H04W 4/029, G06Q 10/06

(54) **SOLUTION TO AID REGULAR TRAVELLERS IN SELECTING A TRAIN SERVICE**

(30) Priority: 15.12.2020 GB 202019779
(71) Applicant: Siemens Mobility Limited, London, NW1 1AD (GB)
(72) Inventor: Brend, Graham, Chippenham, SN15 1GG (GB); Kyd, Graham, Chippenham, SN15 1GG (GB)
(74) Representative: Deffner, Rolf

(57) **Abstract**

A method of providing a predicted occupancy level of a train service, having at least one historical occurrence, to a user of the service, is described. The method is carried out on a server arranged to send and receive data via a communications network to and from a user device. A predicted user occupancy of a train service is calculated based on real-time and historical occupancy data and compared with a range of predicted occupancy levels associated with the user. Based upon the comparison, an indication is provided to the user of whether or not the calculated predicted occupancy level falls within the range.

## Description

Travel by train has become increasingly popular over the last few years, which has put a strain on the current railway infrastructure as typically the same number of trains are required to serve more passengers than previously. Often this results in overcrowded trains and hence disgruntled passengers, especially when those passengers frequently travel over the same route and are faced with continual issues of crowded trains etc. each time they travel. Passengers who travel frequently over the same route are typically those who commute daily and hence are often season ticket holders who pay a significant amount of money for their tickets. Such passengers therefore have an expectation that they can travel in comfort on any of the available train services that they could use. However, this is often not the case and instead the available train services are crowded; leading to stress, dissatisfaction and negative publicity for train operators.

Therefore, it is desirable to mitigate the issues faced by regular passengers when they wish to select a train service, so that they can travel in comfort.

While the present invention is particularly described in relation to train services, it may be applied in similar fashion to other services, such as coach, ferry and air travel services. While particularly applicable to passenger services, the present invention may be applied to freight services, and indeed any transport service.

The present invention accordingly aims to provide tools to assist regular passengers in selecting an appropriate train service. For example, the present invention may provide said passengers with detailed information about predicted occupancy levels of available train services as selected by the user, which the user can use to decide whether they wish to avoid any train services that are too crowded. Such a tool may reduce the inconvenience to the users, being regular passengers, as well as limiting the negative publicity for train operators caused by crowded trains.

Current solutions provide information to travellers about which trains they can catch to get from their starting point to their required destination; including information such as planned departure and arrival times. These solutions can also indicate to said travellers whether there are currently any disruptions to the normal running of the train services. Hence, this information allows said travellers to plan which train they wish to catch to reach a particular destination by a specific time.

Additional known solutions can also provide information to travellers about the quickest route for them to take to get from their starting point to their destination, for example, which service is quickest when there is the possibility of catching trains on different routes to reach their required destination.

However, the information provided to travellers by these current and known solutions is high level and does not provide any indication as to how busy each service currently is or is predicted to become. Hence the traveller does not have any information about how easy it will be for them to board a specific train service and, for example, how many seats might be free on the said train service.

The present invention accordingly provides methods as defined in the appended claims.

The above will become more apparent from the following description of certain embodiments, given by way of examples only, in conjunction with the accompanying drawings, wherein:
Fig. 1 represents an example data set including user criteria with corresponding predicted occupancy level for each transport service, and indications of alerts to be given to a user;
Fig. 2 illustrates a flow chart representing logic of an embodiment of the present invention;
Fig. 3 schematically represents a system which may be employed in an embodiment of the present invention;
Fig. 4 illustrates a flow chart representing logic of another embodiment of the present invention;
Fig. 5 illustrates a flow chart representing logic of another embodiment of the present invention; and
Fig. 6 is a flowchart illustrating an example logic for determining a predicted occupancy level.

Embodiments of the present invention provide a predicted occupancy level of a transport service that has at least one historical occurrence to a user of the service. This is done over a communications network, such as a mobile phone cellular network. At the request of a user of a transport service, location data associated with the user and a time window specified by the user is obtained. At least one transport service falling within the time window is then determined. A predicted occupancy level of the at least one transport service is calculated using a combination of real-time occupancy level data and stored occupancy data. This predicted occupancy level with a range of predicted occupancy levels associated with the user. Based on the comparison, an indication is provided to the user of whether or not the calculated predicted occupancy level falls within the range. The real-time occupancy level data is derived either from cellular and/or WiFi network signals on the at least one transport service and/or passenger reservations for the at least one transport service, and wherein the stored occupancy data is derived from occupancy level data for the at least one historical occurrence of the transport service.Taking the example of a commuter making similar return journeys several times per week, the user may accept high levels of occupancy on services travelling from home location "A" to work location "B", where the services will arrive in time for the user to arrive at work by a target time, for example 0900. The same user may only tolerate lower occupancy levels on later services which would not allow the user to arrive at work by the target time. At the end of the working day, the user may tolerate high occupancy for train services departing soon after the user is scheduled to finish work, but may only tolerate lower occupancy levels for train services departing later.

Furthermore, a user may decide that they do not wish to travel on train services with very low occupancy. For that reason, a minimum occupancy level may be set for some or all services. This may be particularly relevant for late night services, where a user may feel unsafe on a train with few other occupants.

Such maximum and minimum occupancy levels may be set globally for all users, or provision may be made for users to set these levels to their own personal preference, and individually for each train service.

A user will need to define parameters to define services of interest. Typically, such parameters will include departure station, arrival station and departure and/or arrival time. The departure station may be defined by user input to a user interface; or may be determined in correspondence with a current location of a user, which may be derived from the location of a portable communication device.

As mentioned in GB2585028, a user's current position may be derived from a location of a portable communications device carried by the user. For example, with the help of an electronic receiver, the number of portable communications devices on the train can be identified, and the number of passengers operating such devices is obtained. Whilst this number is a good starting point for a calculation of the number of passengers on a train, there may be some passengers who either do not have their portable communications devices switched on or may not carry such devices. It may be that rather than using a WiFi signal provided onboard the train that such portable devices are connected to a cellular communications network, in which case a transceiver is required. Alternatively, it may be desirable to use passenger reservation data if available for the journey. Both portable communications device data and passenger reservations may be used as the input to a statistical model of occupancy levels. This may be used to increase the accuracy of the current occupancy data. In any case, the derivation of occupancy data based on the number of portable communications devices on the train takes place in real-time.

The user's current position may be used as a user parameter to highlight services of interest. The method of the present invention may use the user's current position to calculate which services are most likely to be of interest to the user. A likely arrival time of the user at the station may be calculated, and used to estimate the likely occupancy of a train at the time that the user is likely to arrive at the station. This calculation may be updated as the user's location changes. As the user moves closer to the station, the confidence in the predicted occupancy may be expected to increase.

The user defined parameters will be compared to a list of available train services. Those train services meeting the user defined parameters will be included in a list of services of interest.

The invention invokes a database look up to retrieve data indicating historical occupancy levels for the services of interest. Historical data is used in conjunction with the real-time occupancy data outlined above. Therefore, there must have been at least one historical occurrence of the train service, since at least one previous instance of the service is required as the basis of historical data. A user may customise the historical period over which the occupancy levels are derived. The stored occupancy data used in embodiments of the present invention is derived from occupancy level data for the at least one historical occurrence of the train service. Historical data may be considered to fall into two categories. The first is data relating to train services the user has taken in the past - any service up to but not including the desired travel time for which the predicted occupancy is calculated. This is specific to the user and as a reduced dataset, use of this alone may provide a quicker result than a broader dataset. The second category is data relating to all train services that may be relevant to the user that have also occurred in the past, and again, for this category, this is any service up to but not including the desired travel time for which the predicted occupancy is calculated.

The invention also invokes a database look up to retrieve data indicating current occupancy levels for the services of interest.

The invention provides analysis of the retrieved data indicating historical occupancy levels and the retrieved data indicating current occupancy levels, to provide predicted occupancy levels for the services of interest. As described for example in GB2585028, predictions of future occupancy travel services may use information such as presence of communication devices such as mobile phones, or may use information related to travel bookings, such as may have been placed over internet booking sites.

The invention then compares the predicted occupancy levels for the services of interest to respective maximum and minimum occupancy thresholds. An alert is provided to a user in respect of services of interest whose predicted occupancy levels conform to the respective maximum and minimum occupancy thresholds. In some embodiments, a different alert may be provided in respect of services of interest whose predicted occupancy levels do not conform to the respective maximum and minimum occupancy thresholds.

In a preferred embodiment of the present invention, a user carries a portable communications device, such as a smart phone, tablet computer or similar. The described alerts may be provided to the user by the portable communications device, for example by way of text messages, visual display, sound or vibration patterns.

In some embodiments, the portable communications device may serve as a user interface to enable the user to define parameters. The portable communications device may similarly be used to receive user input to define maximum and minimum occupancy thresholds.

While such a portable communications device may be used to receive user input, and to provide alerts to a user, the invention employs further resources at least in that a communications channel may be employed, along with remote databases, which may be stored on cloud servers and may be accessible by internet, or an equivalent storage and retrieval arrangement. The remote databases contain the historical occupancy levels and the current occupancy levels for the services of interest.

In some embodiments of the present invention, the portable communications device sends corresponding queries to the respective databases, and receives responses containing data relating only to the services of interest. In other embodiments, the portable communications device receives a larger data set, and filters the data relevant to the services of interest itself. Analysis of the retrieved data may then be performed by the portable communications device, which may then provide predicted occupancy levels for the services of interest, and may then determine which alerts to provide to the user. In other embodiments of the present invention, the criteria defining services of interest are sent from the portable communications device over a communications channel to a server, where a database of available services is compared to the criteria defining services of interest, such that the list of services of interest is generated in the server. Data indicating historical occupancy levels and the data indicating current occupancy levels, of the services of interest, may be retrieved by the server, and analysis of this data may be performed by the server, which may then provide predicted occupancy levels for the services of interest to the portable communications device, which may then provide alerts, as appropriate, to the user.

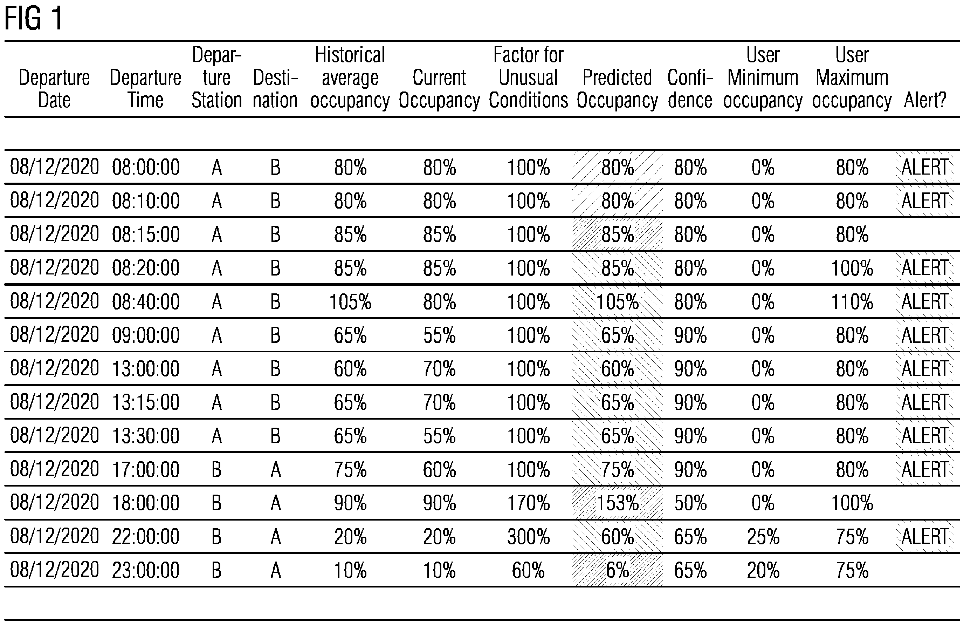

Fig. 1 represents an example data set, as employed in an embodiment of the present invention. The data set may be wholly stored on a portable communications device, or may be partially stored on a portable communications device and partially stored on one or more servers in communication with the portable communications device.

User parameters include Departure Station (in this example, either station "A", being a station convenient for a user's home, or station "B", being a station convenient for a user's work location), ranges of departure times of interest - although in other embodiments, ranges of arrival times may be used instead of, or in addition to, ranges of departure times. The user-defined ranges of departure and/or arrival times may be compared to a database of available services stored on a remote server to provide a list of services of interest, which is the list shown in Fig. 1.

The data derived from a database of historical average occupancy is shown, as is the data derived from a database of current occupancy. As described elsewhere herein, an analysis is performed to derive predicted occupancy for the listed service. Optionally, the analysis may provide a confidence measure, indicating the confidence in the predicted occupancy. For example, where predicted occupancy is based in part on a number of mobile phones detected on a train, or on a platform, a historical analysis which is based on 100 predicted passengers per 80 detected mobile phones may have a higher confidence measure - likelihood of being accurate - than a historical analysis based on 100 predicted passengers per 20 detected mobile phones. A set of data may be provided, as shown, indicating a factor for unusual conditions. This may be derived from a remote database storing information relating to factors which are expected to cause an unusually high occupancy, or an unusually low occupancy, of the service in question. For example, a local sports event may be expected to prompt unusually high occupancy of local train services before, and especially after, the event. Such factors for unusual conditions may be taken into account in calculating the predicted occupancy. For example, a predicted occupancy calculated without taking the factor for unusual conditions into account may be multiplied by that factor to provide the illustrated predicted occupancy. Use of a factor for unusual conditions may affect the confidence level in the predicted occupancy.

User Minimum Occupancy and User Maximum Occupancy levels are shown, defined for each service of interest. These may also be editable by the user. According to the embodiment, either in the portable communication device or in a remote server, the predicted occupancy is determined. The predicted occupancy is compared to the User Minimum Occupancy and User Maximum Occupancy levels by either the portable communication device or the remote server and corresponding alerts may be generated to the user to indicate services with predicted occupancy lying in the range defined by corresponding minimum and maximum occupancy thresholds. In some embodiments, other alerts may be provided to indicate services with predicted occupancy lying outside the range defined by corresponding minimum and maximum occupancy thresholds.

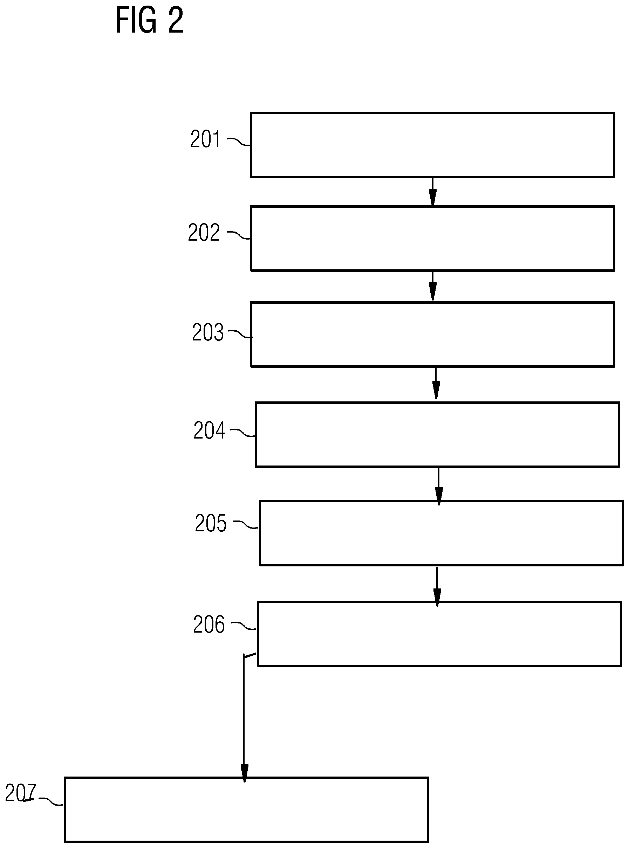

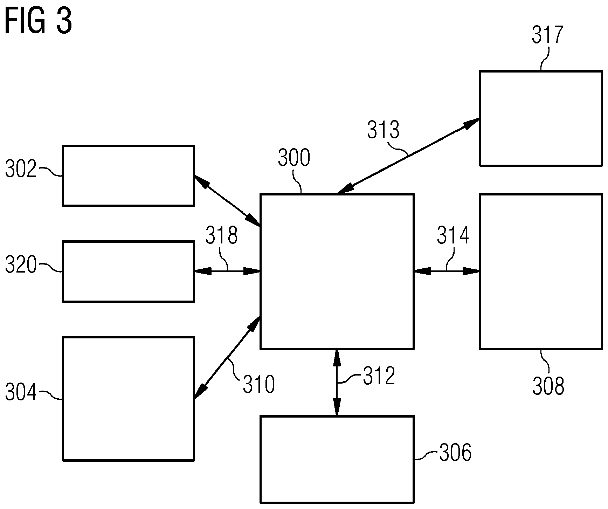

Fig. 2 shows an example flow chart of a method according to an embodiment of the present invention. In this embodiment, the user does not select minimum and maximum occupancy thresholds, but rather, an alert is provided to the user in case the predicted occupancy of a service exceeds the historical average occupancy for that service. In a variant of this embodiment, a user may provide a factor and an alert is then generated only in case the predicted occupancy of the service exceeds the historical average occupancy for that service by an amount in excess of the factor. At step 201, at the request of a train service user, location data associated with the train user and a time window specified by the train user are obtained and processed at a server. The location data may be determined using the portable communication device method outlined above, using satellite position data, such as GPS, GLONASS, linked to a portable communication device or by receiving a location from a user input to a portable communication device. Similarly, the time window may be specified by the time of the user's enquiry (for immediate travel, for example) or by the user via the portable communication device. The location data associated with the user may be the geographical position of the user and a user destination, or a user origin and a user destination, to enable the determination of appropriate train services to take place. At step 202, at least one train service falling within the time window is determined. This is preferably carried out by the server interrogating one of the databases illustrated in Fig. 3 below. Alternatively, the portable communication device may interrogate the databases directly, and process the available train services locally. At step 203, a predicted occupancy level of the at least one train service using a combination of real-time occupancy level data and stored historical occupancy data is calculated. This is done by taking a weighted average of the stored historical occupancy data, with the weighting determined by the real-time occupancy level data. For example, if the stored historical occupancy data indicates that at 0830 on a Tuesday the occupancy of the third carriage of a chosen train service is 65%, but that the real-time occupancy level for the previous stations is 7% higher than average, the predicted occupancy level is adjusted accordingly. In addition, the weighting of the average may be influenced by the date, the weather and other factors. If desired, a time window over which the historical stored data is considered may be set by the user. The weighting may also be influenced by feedback, as described further below.

At step 204, the predicted occupancy level is compared with a range of predicted occupancy levels associated with the user, and at step 205, based upon the comparison, an indication is provided to the user of whether or not the calculated predicted occupancy level falls within the range. Optionally, at step 206, a route based on the location data associated with the user of the train service may be calculated, and the predicted occupancy level dependent on the route also calculated. Various steps may be repeated until the user obtains a satisfactory result based upon different inputs or alternative travel routes.

As described above, the real-time occupancy data is derived by using detected cellular and/or WiFi network signals on the at least one train service and/or passenger reservations on the at least one train service as the input to a statistical model of occupancy levels.

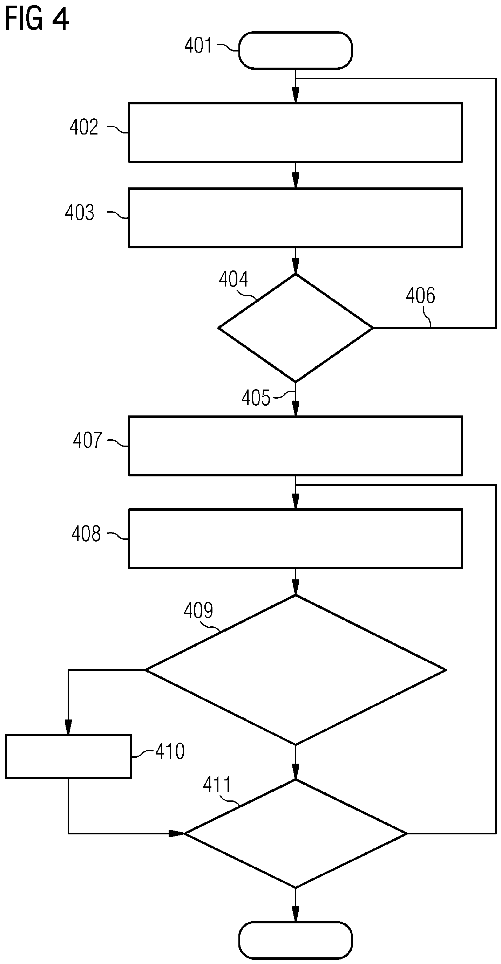

Fig. 3 schematically represents a hardware system which may be employed in an embodiment of the present invention. Fig. 4 shows another example flow chart of a method according to an embodiment of the present invention. The hardware system of Fig. 3 will be referred to alongside the method flow chart of Fig. 4 in the discussion below.

In Fig. 3, communications device 300 is represented. Typically, this will be a portable communications device such as a smart phone, laptop or tablet computer or similar. Other communications devices may be employed if appropriate. A user interface 302 is provided, for receiving user inputs and providing alerts to a user. Typically, the user interface will include a display screen and a text input means; the user interface may alternatively, or in addition, include sound or vibration output means; voice recognition input means. The user interface may be integral to a portable communication device, or may be a peripheral component such as keyboard or headset.

Remote databases 304, 306, 308, 317 are illustrated. Each of the remote databases 304, 306, 308, 317 are accessible to the communications device 300 over communications channels 310, 312, 314, 313. In practice, communications channels 310, 312, 314, 313 may be a same communications channel. In embodiments where communications device 300 is a smart phone or similar, communications channels 310, 312, 314, 313 may be mobile phone data connections, or WiFi, with internet access. In embodiments where the communications device is a laptop or tablet computer or similar, communications channels 310, 312, 314, 313 may include a wired LAN connection to the internet.

Remote database 317 contains a data set of available train services. Remote database 304 contains historical occupancy data relating to a range of train services. Remote database 306 contains real-time occupancy data relating to a range of train services. Remote database 308 may optionally be included in the system and contains data relating to a listing of expected and unusual conditions which may affect occupancy of a range of train services. In some embodiments, information relating to predictions of future occupancy, for example based on presence of mobile phones, or travel bookings placed over internet booking sites, as proposed for example in GB2585028, may be included in database 308.

Generally, the user interface 302 provides user input data to the communications device and provides output such as information and alerts to the user.

The communications device 300 communicates with remote data bases 304, 306, 308, 317 over communications paths 310, 312, 314, 313. The communications device 300 may be arranged to perform analysis steps on the retrieved data. Alternatively, a remote server 320 may be provided, linked by a communications channel 318 to the communications device 300. Analysis steps may be performed on the retrieved data by the remote server 320, with queries and results communicated over communications path 318. Communications path 318 may be the same communications path as communications paths 310, 312, 314, and may include a connection to the internet.

Referring to the steps illustrated in the flow chart of Fig. 2, the start 401 of the process of the embodiment is followed by a step 402 in which the user identifies one or more train services that they may wish to use. This may be done using the user interface 302 shown in Fig. 3 to enter user criteria, such as origin and destination stations, and ranges of departure and/or arrival times for suitable services.

The communications device 300 then consults database 317 to derive a list of available train services which meet the user criteria. This list may be downloaded to the communications device. Optionally, as illustrated at method step 403, a user may specify a historical period over which average occupancy is to be calculated. These steps 402, 403 repeat during loop 406 until all train service of interest to the user have been identified, and optionally, the historical period over which an average density is to be calculated is also defined for each of the services. At step 407, communications device 300 may then consult remote database 304 over communication path 310 to derive corresponding data on historical occupancy of the train services of interest. In step 408, the communications device consults remote database 306, containing real-time occupancy data. Alternatively, or in addition, the communications device consults remote database 308, containing data relating to expected unusual conditions which might affect occupancy of corresponding train services. The communications device 300 may perform analysis on the data received from remote data bases 304, 306, 308; or the communications device 300 may send the data over communications path 318 to a remote server 320 for analysis. The result of such analysis, either carried out by the communications device 300 or by the remote server 320 and represented at step 409 of the method flow chart of Fig. 4, is a predicted occupancy level for each of the services of interest.

In the example method illustrated in Fig. 4, this predicted occupancy level for each of the services of interest is compared to the corresponding data for average occupancy of the respective train service. Where the predicted occupancy of a service exceeds the historical average occupancy, an alert is sent to the user at step 410, from the communications device 300 over the user interface 302. In certain embodiments, the user may provide a user criterion defining a factor which determines whether an alarm is generated once a predicted occupancy exceeds 100% of the historical average occupancy, or some other proportion, such as 80%; 125%; 200%. In such embodiments, the method step 409 is enlarged to include comparing the predicted occupancy of each service to the derived historical occupancy for the corresponding service, multiplied by the user-defined factor. Such calculations and comparisons are performed, either within the communications device 300, or in a remote server 320 linked by communications channel 318, until all services of interest have been evaluated, step 409, and corresponding alerts generated, step 410. This marks the end of the sampling period at step 411, and the steps 408-411 may be repeated cyclically, to provide updated estimates of occupancy data on the services of interest.

In other embodiments, such as those described with reference to the data set of Fig. 1, the user may specify maximum and minimum occupancy thresholds for each service of interest, and an alert is generated to a user in case that the predicted occupancy exceeds a maximum occupancy threshold; a different alert may be generated for services of interest where the predicted occupancy falls below the minimum occupancy threshold.

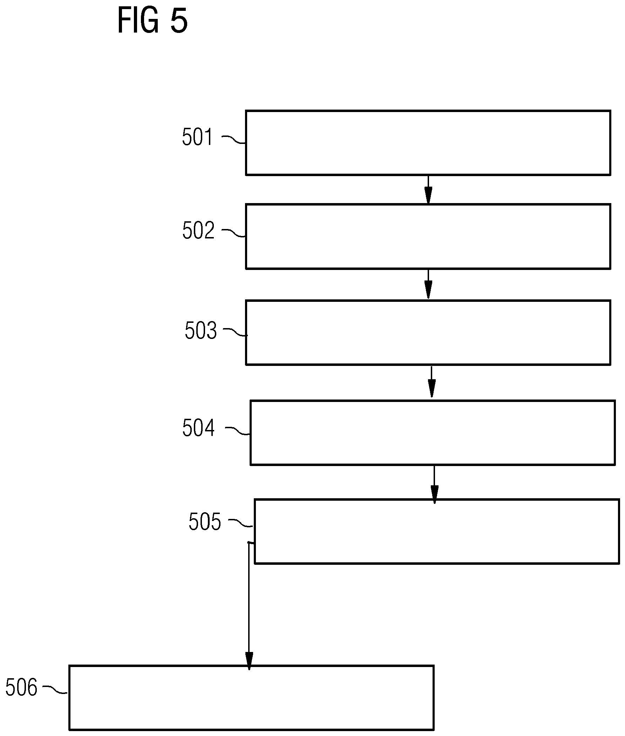

Fig. 5 shows another example flow chart of a method according to an embodiment of the present invention. In this embodiment, the method is carried out at a portable communication device that is able to access data stored on at least one remote database managed by a remote server via a communications network. At step 501, location data associated with a train user and a time window specified by the train user is obtained. At step 502, at least one train service falling within the time window based on data obtained from a remote database is determined. At step 503, a predicted occupancy level of the at least one train service is calculated using a combination of real-time occupancy level data and stored historical occupancy data obtained from the remote database. At step 504, the predicted occupancy level is compared with a range of predicted occupancy levels associated with the user. At step 505, based upon the comparison, an indication is provided to the user of whether or not the calculated predicted occupancy level falls within the range. As in the embodiments above, the real-time occupancy level data is derived either from cellular and/or WiFi network signals from portable communication devices on the at least one train service and/or passenger reservations for the at least one train service, and wherein the stored historical occupancy data is derived from occupancy level data for the at least one historical occurrence of the train service. The indication may alert the user that the predicted occupancy level falls within the range. Alternatively, the indication may alert the user that the predicted occupancy level falls outside of the range. The real-time occupancy data may be derived by using detected cellular and/or WiFi network signals from portable communication devices on the at least one train service and/or passenger reservations on the at least one train service as the input to a statistical model of occupancy levels. The range of predicted occupancy levels may be editable by the user. The location data associated with the user may be the geographical position of the user and a user destination. The geographical location of the user may be determined using a GPS or similar satellited determined positioning device associated with the portable communication device. The location data associated with the user may alternatively be a user origin and a user destination. The time window specified by the user may be future-dated. In addition, at an optional step 506 a route based on the location data associated with the user of the train service and the predicted occupancy level dependent on the route is calculated.

It may also be desirable to include a user feedback step. This may comprise a step of requesting feedback from the user in relation to the accuracy of the predicted occupancy level. For example, a request to initiate feedback may be pushed from the server to the portable communication device to request an indication from the user of whether or not the predicted occupancy was accurate for a particular journey. Alternatively, there may be a feedback option included in the options available to the user within the settings of the software on the portable communication device where the user can push feedback to the server. Alternatively, if the predicted occupancy has been calculated on the portable communication device based on information retrieved from the server rather than by the server itself, the feedback may be retained locally.

The purpose of such feedback is two-fold. Firstly, in the context of the overall method, feedback may be used to indicate whether or not the algorithm has successfully applied a weighting of historical data to determine a predicted occupancy, or whether the weighting was incorrect. This is particularly important for determining the predicted occupancy of a train in advance of a journey where the user has a choice of several travel times or routes, since whilst the current occupancy of a train *en route* may be known, it is also necessary to be able to modify this current occupancy based upon typical boarding and alighting patterns at intermediate stations. Secondly, the feedback may be used to modify travel pattern and preference data held in respect of the user. For example, the user may have initially indicated that they were happy to accept 80% occupancy of a certain service in order to travel but has subsequently reassessed this and only wishes to accept 60% predicted occupancy for the same journey in the future, based upon their most recent travel experience. If a supervised machine-learning approach is used for algorithm optimisation the historical data may be used as training data in relation to calculating the predicted occupancy. The feedback component may then be used as part of the iterative optimisation of the algorithm as part of an active learning approach.

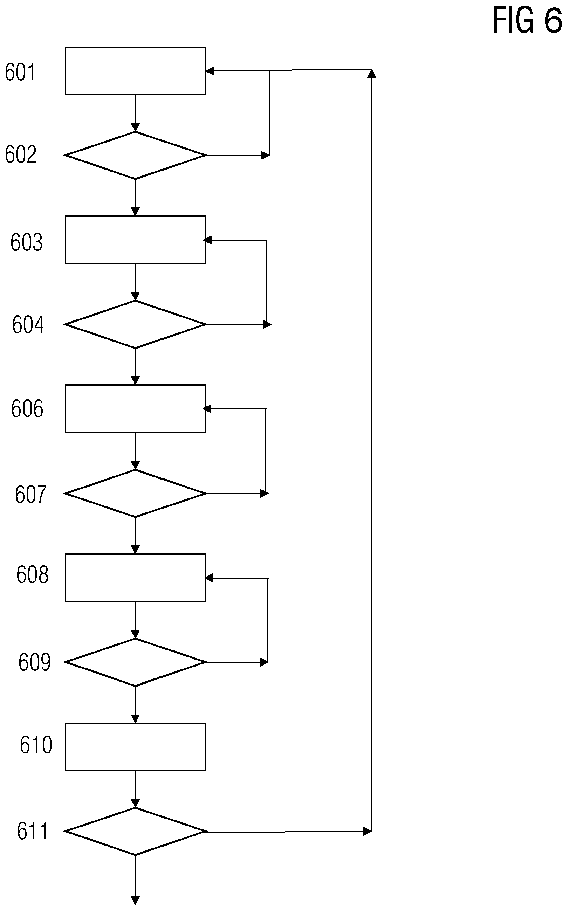

One example of how a predicted occupancy level is calculated for a particular route using real-time data is shown in Figure 6. Figure 6 is a flowchart illustrating an example logic for determining predicted occupancy level. The method 600 initially comprises at step 602 retrieving an destination for a user from a ticket reservation system that the user has used for the journey that the predicted occupancy needs to be calculated for. At step 604, a check is made as to whether a destination has been received for all of the passengers on the train. If this has not happened, the method 600 returns to step 602. If the destination information for all of the passengers on the train has been retrieved, the method progresses to step 606 to use the retrieved destination for all passengers to determine the occupancy level for the next station on the route. At step 608 a check is made to determine whether the occupancy level has been determined for all of the stations along the route. If not, the method 600 returns to step 606, if it has, the method 600 moves on to step 610 to retrieve the destination information for passengers waiting at the next station along the route. Again, a check is included at step 612 to determine if this has been done for all passengers waiting at the station, and if not, the method 600 returns to step 610. If all of the destination information for the passengers waiting at the next station has been retrieved, at step 614 this is used, along with the current occupancy level of the train to generate an overall predicted occupancy level for the train route in question. This may be then provided to the user as an indication of the predicted occupancy level for the chosen route, or more preferably, is used along with historical information as a weighting and other sources of occupancy level data to provide a more refined and accurate predicted occupancy level to the user.

While the present invention has been specifically described with particular reference to passenger train services, the invention may also be applied to rail freight services, passenger coach services, ferries, and any timetabled transport service. Although several embodiments have been described separately, other embodiments may comprise features described herein with respect to separate embodiments.

## Claims

1. Method of providing a predicted occupancy level of a train service, having at least one historical occurrence, to a user of the service, the method being carried out on a server arranged to send and receive data via a communications network to and from a portable communication device, the method comprising the steps of:
a) at the request of a train service user, obtaining location data associated with the train user and a time window specified by the train user;
b) determining at least one train service falling within the time window;
c) calculating a predicted occupancy level of the at least one train service using a combination of real-time occupancy level data and stored historical occupancy data;
d) comparing the predicted occupancy level with a range of predicted occupancy levels associated with the user; and
e) based upon the comparison, providing an indication to the user of whether or not the calculated predicted occupancy level falls within the range;
wherein the real-time occupancy level data is derived either from cellular and/or WiFi network signals from portable communication devices on the at least one train service and/or passenger reservations for the at least one train service, and wherein the stored historical occupancy data is derived from occupancy level data for the at least one historical occurrence of the train service.

2. Method as claimed in claim 1, wherein the indication alerts the user that the predicted occupancy level falls within the range.

3. Method as claimed in claim 1, wherein the indication alerts the user that the predicted occupancy level falls outside of the range.

4. Method as claimed in any preceding claim, wherein the real-time occupancy data is derived by using detected cellular and/or WiFi network signals from portable communication devices on the at least one train service and/or passenger reservations on the at least one train service as the input to a statistical model of occupancy levels.

5. Method as claimed in any preceding claim, wherein the range of predicted occupancy levels is editable by the user.

6. Method as claimed in any preceding claim, wherein the request by the user is made via a user input at a user interface of a portable communication device.

7. Method as claimed in claim 6, wherein the location data associated with the user is the geographical position of the user and a user destination.

8. Method as claimed in claim 7, wherein the geographical location of the user is determined using a GPS device associated with the portable communication device.

9. Method as claimed in claim 1, 2, or 3, wherein the location data associated with the user is a user origin and a user destination.

10. Method as claimed in claim 9, wherein the time window specified by the user is futu re-dated.

11. Method as claimed in any preceding claim, further comprising calculating a route based on the location data associated with the user of the train service and calculating the predicted occupancy level dependent on the route.

12. Method as claimed in any preceding claim, further comprising a step of requesting feedback from the user in relation to the accuracy of the predicted occupancy level.

13. Method as claimed in any preceding claim, further comprising including a feedback option within the options provided to the user within the settings of the software provided on the portable communication device.

14. Method of providing a predicted occupancy level of a train service, having at least one historical occurrence, to a user of the service, the method being carried out on a portable communication device arranged to send and receive data via a communications network to and from a remote server and at least one remote database managed by the server, the method comprising the steps of:
a) obtaining location data associated with a train user and a time window specified by the train user;
b) determining at least one train service falling within the time window based on data obtained from a remote database;
c) calculating a predicted occupancy level of the at least one train service using a combination of real-time occupancy level data and stored historical occupancy data obtained from the remote database;
d) comparing the predicted occupancy level with a range of predicted occupancy levels associated with the user; and
e) based upon the comparison, providing an indication to the user of whether or not the calculated predicted occupancy level falls within the range;
wherein the real-time occupancy level data is derived either from cellular and/or WiFi network signals from portable communication devices on the at least one train service and/or passenger reservations for the at least one train service, and wherein the stored historical occupancy data is derived from occupancy level data for the at least one historical occurrence of the train service.
